# EUROPEAN PATENT APPLICATION

(11) **EP 2 339 840 A1**
(43) Date of publication of application: **29.06.2011**
(21) Application number: 10174092.6
(22) Date of filing: 26.08.2010
(51) Int. Cl.: H04N 5/775, H04N 5/44

(54) **Display apparatus and control method thereof**

(30) Priority: 07.12.2009 KR 20090120334
(71) Applicant: Samsung Electronics Co., Ltd., Yeongtong-gu Suwon-si, Gyeonggi-do (KR)
(72) Inventor: Park, Yoo-jin, Gyeonggi-do (KR)
(74) Representative: Bruce, Alexander Richard Henry

(57) **Abstract**

A display apparatus and a control method thereof are disclosed. The display apparatus includes: a connection unit which is to be connected with at least one external device; a signal processing unit which processes an image signal; a display unit which displays an image on the basis of the image signal processed by the signal processing unit; a storage unit which stores therein a setting menu regarding a plurality of functions of the display apparatus; and a controller which controls the signal processing unit so that the setting menu regarding at least one of the plurality of functions of the display apparatus corresponding to the external device which is connected to the connection unit, is displayed through the display unit, and so that the image is displayed through the display unit according to user's setting through the setting menu.

## Description

The present invention relates to a display apparatus which can promptly provide a control menu of the display apparatus corresponding to an external device connected thereto, and a control method thereof.

In general, a display apparatus may be connected with a variety of external devices such as a digital video disk (DVD) home theater, a personal computer, a universal serial bus (USB) or the like. In the case that the display apparatus is used with such an external device, a user has to change a variety of setting values which are dispersed in menus of a variety of categories so as to optimize the display apparatus to be suitable for the connected external device. To this end, the user has to perform a large number of remote control input operations to search for the dispersed setting values.

Exemplary embodiments provide a display apparatus which can promptly provide a control menu of the display apparatus regarding external devices connected thereto to remove inconvenience due to a large number of remote control input operations, and a control method thereof.

According to an aspect of an exemplary embodiment, there is provided a display apparatus including: a connection unit which is connectable with at least one external device; a signal processing unit which processes an image signal; a display unit which displays an image on the basis of the image signal processed by the signal processing unit; a storage unit which stores therein a setting menu regarding a plurality of functions of the display apparatus; and a controller which controls the signal processing unit so that the setting menu related to at least one of the plurality of functions of the display apparatus corresponding to the external device which is connected to the connection unit is displayed by the display unit and so that the image is displayed by the display unit according to a setting selected via the setting menu.

The setting menu may be set according to the type of the external device.

The connection unit may include a plurality of ports to which the external device is connectable, and the controller may determine the setting menu corresponding to the port, to which the external device is connected, among the plurality of the ports.

The controller may select, in a case where the display apparatus has a plurality of functional combinations with respect to the external device, at least one of the plurality of functional combinations according to a setting selected via the setting menu.

The plurality of functions may include functions which belong to different categories.

The controller may control the signal processing unit so that a list of the plurality of external devices is displayed via the display unit in a case where the plurality of external devices is connected to the connection unit.

The plurality of functions may be classified in a directory type, and the controller may control the signal processing unit so that menus in a directory, which each include at least one function corresponding to the external device, are sequentially displayed via the display apparatus.

The connection unit may perform wireless and/or wired communication with the external device.

A plurality of functional combinations may be provided for each of the plurality of external devices, and the controller may control the signal processing unit so that the functional combinations corresponding to the external device connected thereto are displayed via the display unit.

According to an aspect of another exemplary embodiment, there is provided a control method of a display apparatus, including: storing a setting menu regarding a plurality of functions of the display apparatus; connecting the display apparatus with at least one external device; displaying the setting menu regarding at least one of the plurality of functions of the display apparatus corresponding to the connected external device; and displaying an image according to a setting selected via the setting menu.

The setting menu may be set according to the type of the external device.

The display apparatus may include a plurality of ports to which the external device is to be connected, and the function of the setting menu corresponding to the port to which the external device may be connected, among the plurality of ports is determined.

In a case where the display apparatus has a plurality of functional combinations with respect to the external device, at least one of the plurality of functional combinations may be selected according to a setting.

The plurality of functions may include functions which belong to different categories.

In a case where the plurality of external devices may be connected to the display apparatus, a list of the plurality of external devices is displayed.

The plurality of functions may be classified in a directory manner, and menus in a directory, which each include at least one function corresponding to the external device, are sequentially displayed.

The display apparatus may perform wireless and/or wired communication with the external device.

A plurality of functional combinations may be provided for each of the plurality of external devices, and the functional combinations may be displayed corresponding to the connected external device. Also, another exemplary embodiment may provide a display apparatus and method thereof, without a storage unit and its operations.

The above and/or other aspects will become apparent and more readily appreciated from the following description of the exemplary embodiments, taken in conjunction with the accompanying drawings, in which:
FIG. 1 is a block diagram illustrating a configuration of a display apparatus according to an exemplary embodiment;
FIG. 2 is diagram illustrating a network which includes a display apparatus and external devices according to an exemplary embodiment;
FIGS. 3A and 3B are diagrams illustrating a setting menu according to an exemplary embodiment;
FIGS. 4A and 4B are diagrams for illustrating a process of searching for the setting menu shown in FIG. 3B;
FIG. 5A is a diagram illustrating a setting menu according to another exemplary embodiment;
FIG. 5B is a diagram illustrating a setting menu according to still another exemplary embodiment;
FIG. 5C is a diagram illustrating a setting menu according to yet another exemplary embodiment; and
FIG. 6 is a flowchart illustrating a control process of a display apparatus according to an exemplary embodiment.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

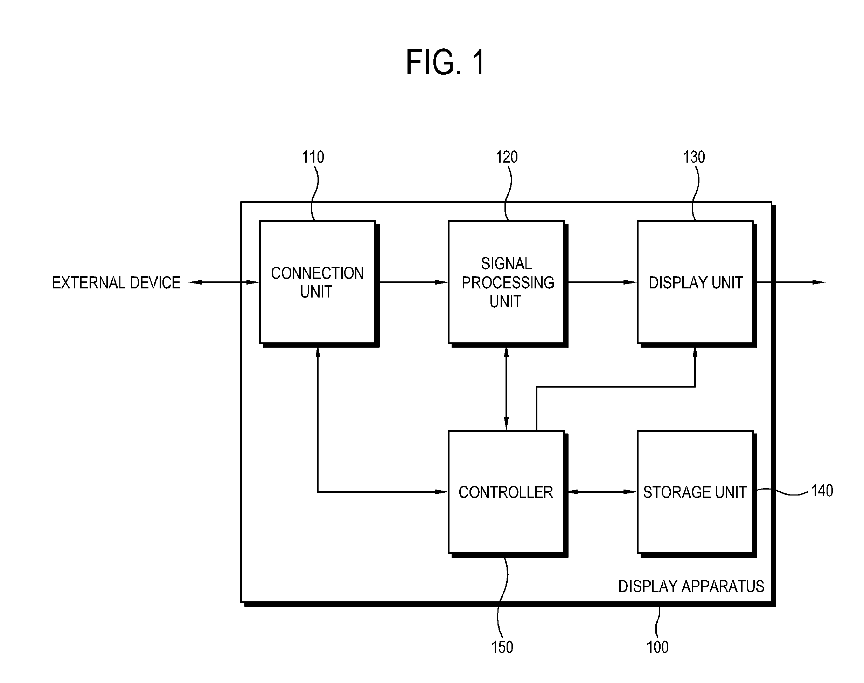

FIG. 1 is a block diagram illustrating a configuration of a display apparatus according to an exemplary embodiment.

A display apparatus 100 according to the exemplary embodiment of FIG. 1 may include an electronic apparatus which can perform communication with external devices and display an image, such as a digital television, a laptop computer, a desktop computer, a mobile terminal, a monitor or the like.

The display apparatus 100 may include a connection unit 110, a signal processing unit 120, a display unit 130, a storage unit 140, and a controller 150.

The connection unit 110 may be connected with at least one external device. Specifically, the connection unit 110 may perform wired and/or wireless communication with the external device. For example, the connection unit 110 may perform wired communication such as power line communication or cable communication with the external device, or may perform wireless communication such as LAN (Local Area Network) communication, WLAN (Wireless LAN) communication, Wi-Fi communication, Bluetooth communication, or Zigbee communication. Further, the connection unit 110 may perform communication with an external device connected to a port which is provided in the display apparatus 100. For example, the connection unit 110 may perform communication with the external device which is connected to a port such as HDMI (High Definition Multimedia Interface), DisplayPort, DVI (Digital Visual Interface), D-Sub, RS-232C.

The signal processing unit 120 may process an image signal. Specifically, the signal processing unit 120 may perform encoding, decoding, demodulation or the like, with respect to the image signal.

The display unit 130 may display an image on the basis of the image signal processed by the signal processing unit 120. To this end, the display unit 130 may include a display panel (not shown) such as a liquid crystal display (LCD), an organic light emitting diode (OLED) or a plasma display panel (PDP), and a panel driver (not shown).

In the storage unit 140 may be stored a setting menu regarding a plurality of functions of the display apparatus 100. According to an exemplary embodiment, the setting menu may include a plurality of functional combinations provided for every external device. Specifically, the setting menu may include a plurality of functions of the display apparatus 100, which are needed to correspond to the external device connected thereto.

The controller 150 may control the signal processing unit 120 so that the setting menu regarding at least one of the plurality of functions of the display apparatus 100, corresponding to the external device connected to the connection unit 110, can be displayed through the display unit 130. In this case, the controller 150 may control the signal processing unit 120 so that an image can be displayed according to a user setting a desired function using the setting menu.

In the case that a plurality of external devices are connected to the connection unit 110, the controller 150 may control the signal processing unit 120 so that a list of the plurality of external devices can be displayed through the display unit 130.

Further, the controller 150 may provide a plurality of functional combinations for every external device, and may control the signal processing unit 120 so that the functional combinations corresponding to the external device connected thereto can be displayed.

The setting menu may be set in a variety of manners.

According to an exemplary embodiment, the setting menu may be set according to the type of an external device. Specifically, the setting menu may include at least one menu by which the display apparatus 100 can be optimized and used according to an external device connected thereto. For example, in the case that the external device is a laptop computer, the setting menu may include a plurality of functions by which the display apparatus 100 can be optimized and used as a monitor. Further, in the case that the external device is a DVD player, the setting menu may include a plurality of functions by which the display apparatus 100 can be optimized and used as a screen. Furthermore, in the case that the external device is a mobile terminal, the setting menu may include a plurality of functions by which the display apparatus 100 can be optimized and used as a terminal for video calls.

According to another exemplary embodiment, the setting menu may be set according to the type of an external device, a port to which the external device is connected, or both. To this end, the connection unit 110 may include a plurality of ports to which external devices are to be connected, and the controller 150 may determine a function of the setting menu according to a port to which an external device is connected, among the plurality of ports. Specifically, the setting menu may include at least one menu by which the display apparatus 100 can be optimized and used according to the connected external device and the connection port. For example, in the case that the external device is an audio/video (AV) device and the AV device is connected with a high definition multimedia interface (HDMI) port, the setting menu may include a plurality of functions regarding an HDMI interface, among functions by which the display apparatus 100 can be optimized and used as a screen. In the case that the external device is the AV device, and the AV device is connected with an RGB port, the setting menu may include a plurality of functions regarding an RGB input, among functions by which the display apparatus 100 can be optimized and used as a screen. That is, in both the former and latter cases, contents of the setting menu may be different according to whether the AV device is connected to the HDMI port or the RGB port.

According to another exemplary embodiment, in the case that the display apparatus 100 has a plurality of functional combinations corresponding to external devices, the setting menu may be set by a user's setting. In this case, the controller 150 may select at least one of the plurality of functional combinations based on the user's setting. Specifically, the setting menu may include a functional combination selected by a user, among a plurality of functional combinations by which the display apparatus 100 can be optimized and used according to an external device connected thereto. For example, in the case that the external device is a laptop computer, the display apparatus 100 may operate as a monitor for displaying a game which is being executed in the laptop computer, or may operate as a screen for displaying a video which is being reproduced in the laptop computer. In this case, the display apparatus 100 may display, as a setting menu, functional combinations necessary for the monitor operation or the screen operation.

On the other hand, the plurality of functions may include functions which belong to different categories.

Further, the plurality of functions may be classified in a directory type. In this case, the controller 150 controls the signal processing unit 120 so that menus of a directory type which each includes at least one function corresponding to an external device can be sequentially displayed via the display unit 130.

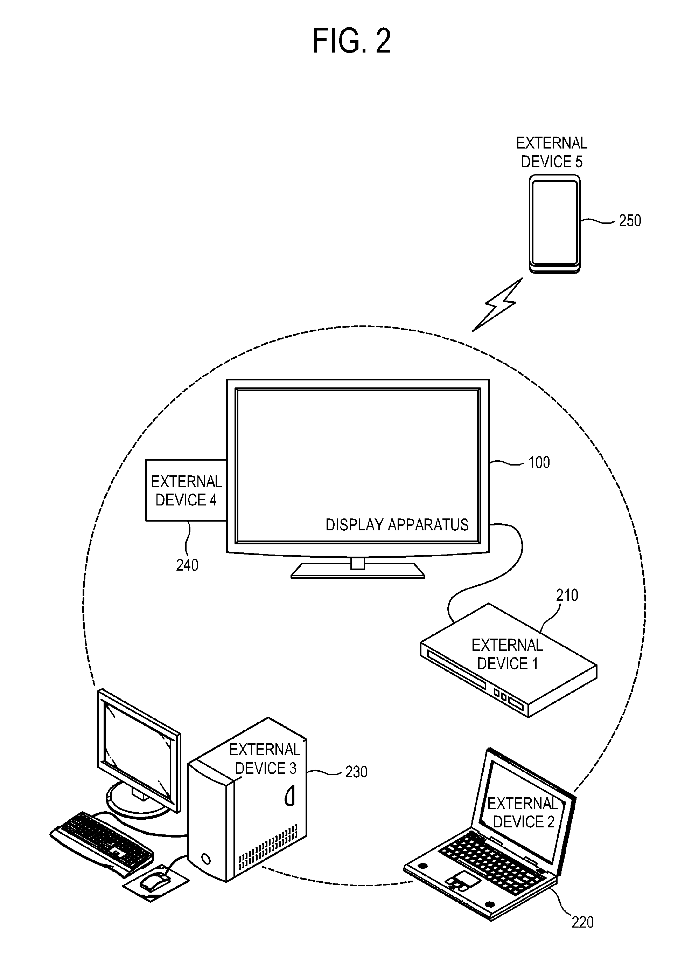

FIG. 2 illustrates an example of a network which includes a display apparatus and an external device, according to an exemplary embodiment. The network may include a Digital Living Network Alliance (DLNA) network, a local area network (LAN) network, wireless LAN (WLAN) network, or the like. In this respect, a display apparatus 100 may perform wired and/or wireless communication such as LAN communication, Wi-Fi communication, Bluetooth communication or internet protocol (IP) communication, with a plurality of external devices 210, 220, 230, 240 and 250. The external devices may include a variety of devices such as a DVD receiver, DVD, personal computer, mobile terminal or USB.

In FIG. 2, a first external device 210 may be a DVD player. In this case, the DVD player 210 may be connected to an HDMI port of the display apparatus 100 in a wired manner.

A second external device 220 may be a laptop computer. In this case, the laptop computer 220 may perform wireless communication such as Bluetooth communication, Wi-Fi communication or LAN communication, with the display apparatus 100.

A third external device 230 may be a desktop personal computer. The desktop personal computer 230 may also perform wireless communication such as Bluetooth communication, Wi-Fi communication or LAN communication, with the display apparatus 100. Further, the desktop personal computer 230 may perform wired communication such as a power cable communication with the display apparatus 100.

A fourth external device 240 may be a USB. In this case, the USB 240 may be connected to a USB port provided in the display apparatus 100.

A fifth external device 250 may be a mobile terminal. In this case, the mobile terminal 250 may perform wireless LAN communication, IP communication or the like with the display apparatus 100. In the case of the wireless LAN communication, the mobile terminal 250 may perform communication with the display apparatus 100 without regional limits.

In this way, the display apparatus 100 and the plurality of external devices 210, 220, 230, 240 and 250 which are included in the network may be connected with each other via the various communications means, and may share or communicate contents thereof.

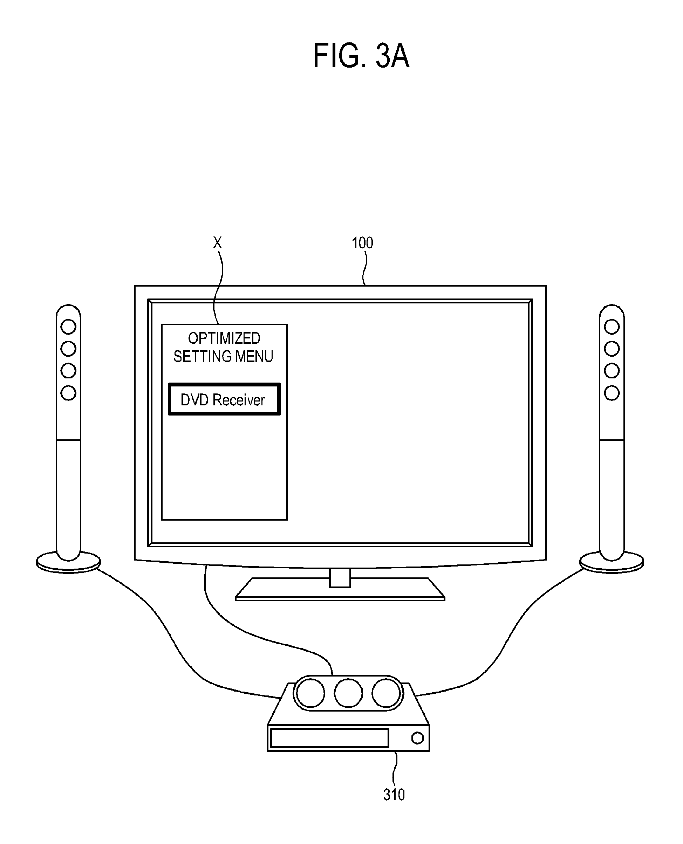

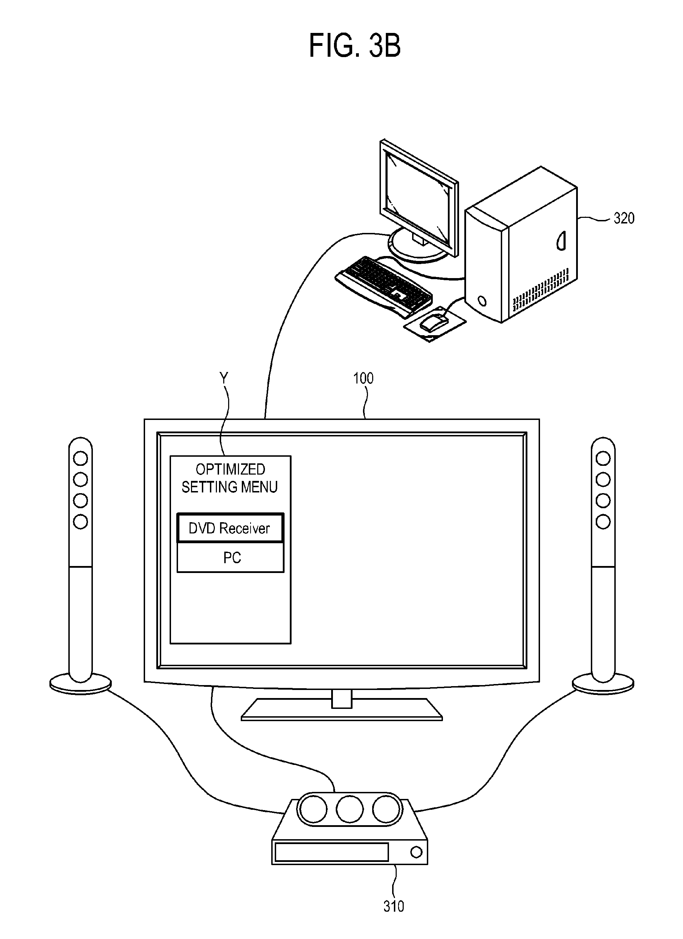

FIGS. 3A and 3B illustrate a setting menu according to an exemplary embodiment.

The setting menu according to the present exemplary embodiment of FIGS. 3A and 3B may be set according to the type of an external device. Specifically, the setting menu may include at least one menu by which the display apparatus 100 can be optimized and used according to an external device connected thereto.

Referring to FIG. 3A, a setting menu X regarding a function corresponding to a DVD receiver 310 is displayed on a screen. For example, the setting menu X may include a plurality of functions by which the display apparatus 100 can be optimized and used as a screen. The setting menu X may be displayed on the screen of the display apparatus 100 when the DVD receiver 10 is connected to the display apparatus 100.

Referring to FIG. 3B, a setting menu Y regarding functions corresponding to a DVD receiver 310 and a personal computer 320 is displayed on a screen. That is, the display apparatus 100 may be simultaneously connected with a plurality of external devices. In FIG. 3B, the DVD receiver 310 and the personal computer 320 are simultaneously connected to the display apparatus 100. For example, the setting menu Y may include a plurality of functions by which the display apparatus 100 can be optimized and used as a screen, and a plurality of functions by which the display apparatus 100 can be optimized and used as a monitor.

In this way, the display apparatus 100 may provide an optimized setting menu for setting the display apparatus 100 in an optimized state with respect to external devices.

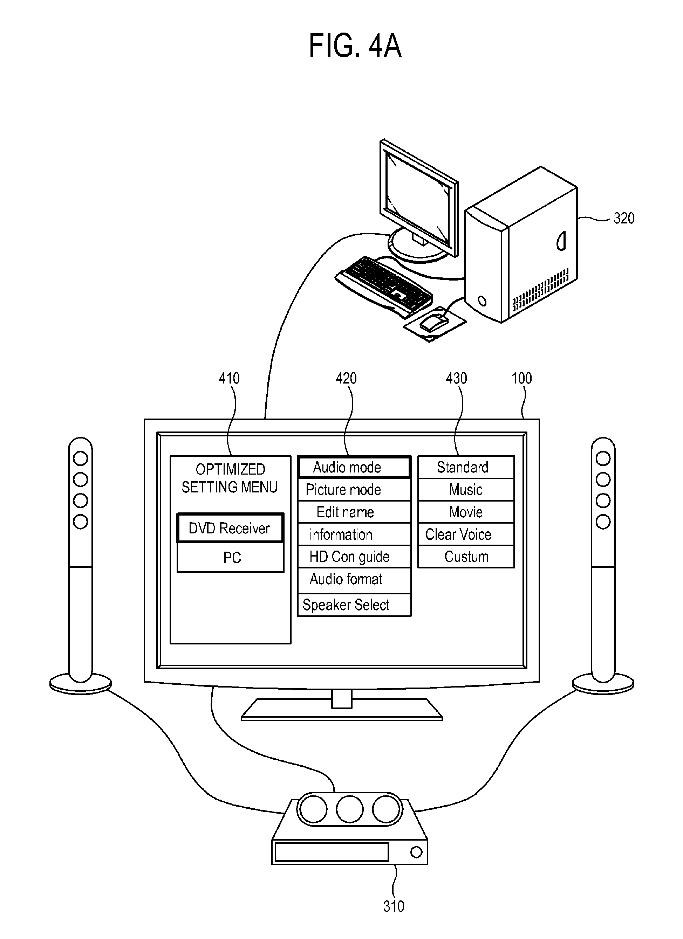

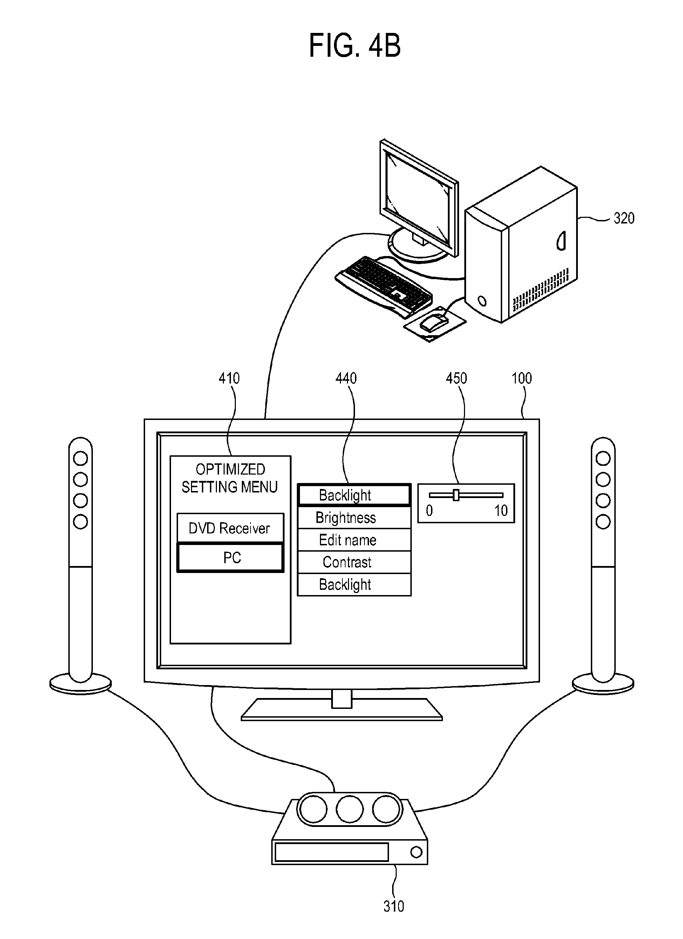

FIGS. 4A and 4B illustrate a process of searching for the setting menu as shown in FIG. 3B.

FIG. 4A illustrates a display apparatus, in which functions regarding the DVD receiver 310 can be searched for. In the case that the external device is the DVD receiver 310, the display apparatus 100 may be used as a screen as described above. In this case, in order for the display apparatus 100 to be optimized and used as the screen, functions regarding image quality, audio, picture ratio, etc. should be newly set or changed. For example, since a picture ratio of broadcasting images and that of movie images are different from each other, in order to change the display apparatus 100 from a broadcasting image reproducing mode into a movie image reproducing mode, the picture ratio should be changed accordingly.

Sub menus 420 and 430 regarding the DVD receiver 310 may respectively include a plurality of functions by which the display apparatus 100 can be optimized and used as a screen. For example, in the case that a user selects the DVD receiver 310 using the optimized setting menu 410 to view movies through the display apparatus 100, the display apparatus 100 may provide a bundle of functions only for DVD movie viewing, among functions of the display apparatus 100 which are dispersed in different categories.

Referring to FIG. 4A, the first sub menu 420 regarding the DVD receiver 310 includes functions such as 'Audio mode', 'Picture mode', 'Edit name', 'information', 'HD Con guide', 'Audio format' and 'Speaker select'. Further, the second sub menu 430 regarding the 'Audio mode' function includes setting values such as 'Standard', 'Music', 'Movie', 'Clear Voice' and 'Custom'. In this case, a user may promptly set his or her desired function such as 'Audio mode', 'Picture mode' or 'Audio format' through the sub menus 420 and 430, to thereby set the display apparatus 100 in the state of being optimized for the DVD receiver 310.

FIG. 4B illustrates a display apparatus, in which functions regarding the personal computer 320 can be searched for. In the case that the external device is the personal computer 320, the display apparatus 100 may be used as a monitor as described above. For example, the display apparatus 100 may operate as a monitor for displaying a game which is being executed by the personal computer 320. In this case, in order for the display apparatus 100 to be optimized and used as a monitor, functions such as backlight, brightness should be newly set or changed. For example, since a user generally uses a monitor in a close distance, the brightness of the display apparatus 100 should be lowered.

Sub menus 440 and 450 regarding the personal computer 320 may include a plurality of functions by which the display apparatus 100 can be optimized and used as a monitor. For example, as shown in FIG. 4B, the first sub menu 440 may include functions of 'Backlight', 'Brightness', 'Edit name' and 'Contrast'. The second sub menu 460 regarding the 'Backlight' function may include a control object for controlling a backlight unit. In this case, a user may manipulate the control object to adjust the brightness of light emitted from the backlight unit. In this way, the user may set the display apparatus 100 in the state of being optimized for the personal computer 320 connected thereto.

In FIGS. 4A and 4B, the sub menus are shown in a directory type where each sub menu includes at least one function corresponding to each of the external devices 310 and 320, which can be sequentially displayed. However, according to an exemplary modified embodiment, at least one function corresponding to each of the external devices 310 and 320 may be independently displayed at a time.

In the case that a variety of external devices are connected to the display apparatus 100 as described above, functions of the display apparatus 100 regarding the respective external devices are generally dispersed in menus of different categories. In this case, according to the related art, in order to set desired functions regarding a selected external device, a user should be sufficiently accustomed to the menus of the display apparatus 100 and should search for every menu, which causes inconvenience to the user. For example, in order to view a movie, which has been reproduced in a DVD home theater, via the display apparatus 100 in an optimized state, functions of the display apparatus 100 in this regard should be changed and set. In this case, the user should individually search for functions such as 'Picture', 'Audio' 'Support' or the like to change setting values.

However, according to an exemplary embodiment, since an optimized setting menu which includes a bundle of functions corresponding to every external device may be provided, a user may conveniently change and set functions of the display apparatus 100 according to the external device using the optimized setting menu.

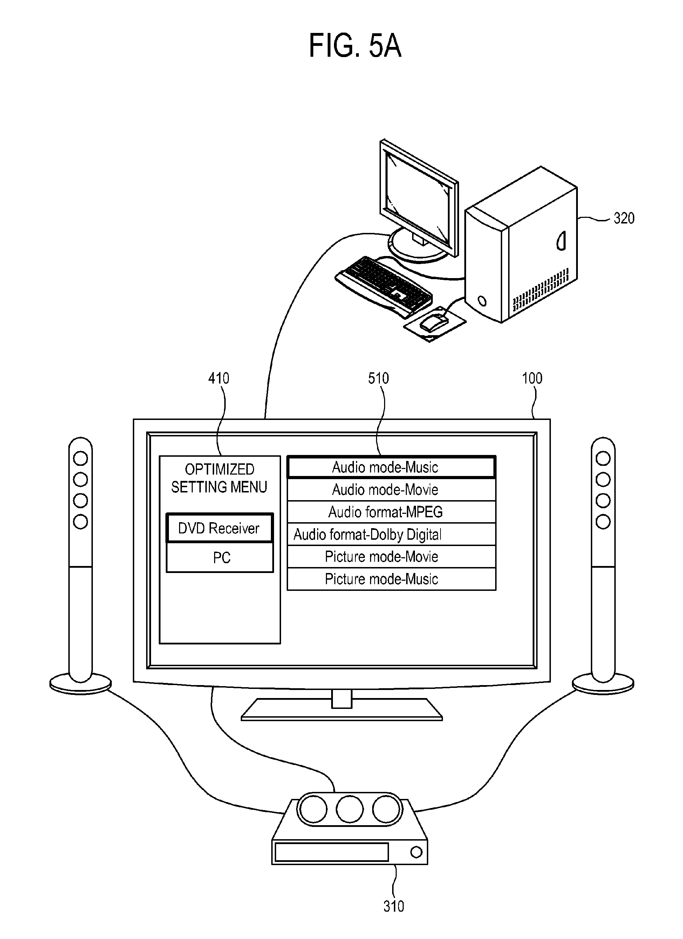

FIG. 5A illustrates a setting menu according to another exemplary embodiment.

According to the exemplary embodiment of FIG. 5A, the setting menu may include at least one function which has been frequently selected when a specific external device is connected. For example, as shown in FIG. 5A, a sub menu 510 regarding a DVD receiver 310 may include functions such as 'Audio mode-Music', 'Audio mode-Movie', 'Audio format-MPEG', 'Audio Format-Dolby Digital', 'Picture mode-Movie' and 'Picture mode-Music' which have been frequently selected when connected with the DVD receiver 310. Further, as shown, setting values such as 'Music' or 'Movie' may be displayed together with each of the functions such as 'Audio mode'.

In this way, when a specific external device is connected, a user may be supplied with functions of the display apparatus 100 which have been frequently selected regarding the connected external device, without a separate search.

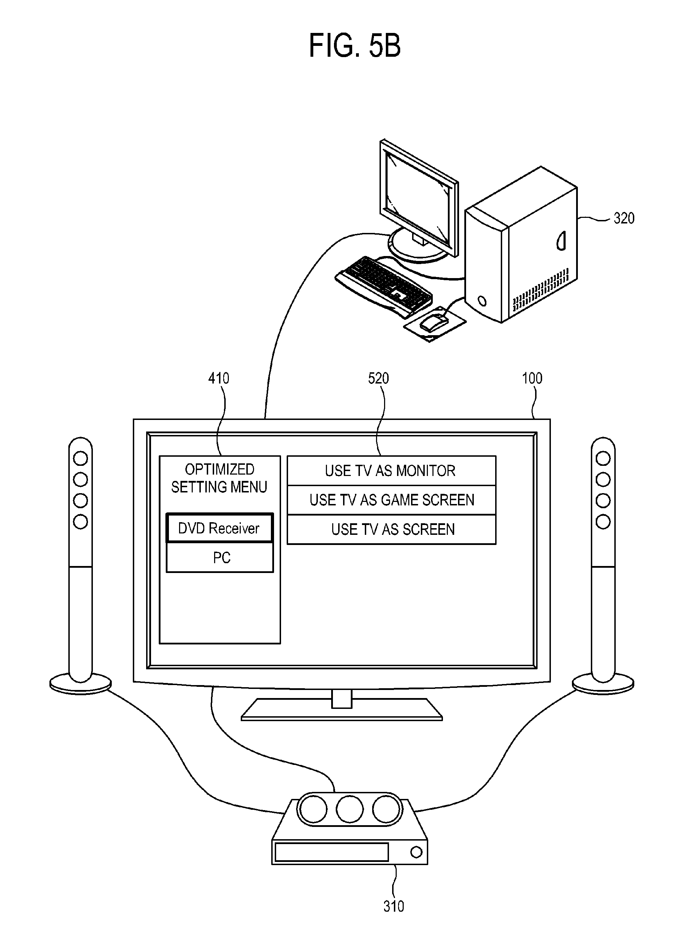

FIG. 5B illustrates a setting menu according to still another exemplary embodiment.

As shown in FIG. 5B, an optimized setting menu 410 may include a sub menu 520 which includes a plurality of functional combinations of the display apparatus 100 which may be performed, corresponding to an external device connected thereto. In this case, a user may select at least one of the plurality of functional combinations.

Specifically, the sub menu 520 of the DVD receiver 310 may include functions of the display apparatus 100 such as 'use TV as monitor', 'use TV as game screen' and 'use TV screen' which may be performed when the DVD receiver 310 is connected.

In this way, a user may be conveniently supplied with a plurality of functions of the display apparatus 100 which may be performed, corresponding to an external device connected thereto, without a separate search.

According to an exemplary modified embodiment, the setting menu may include a plurality of recommendation functions which is suitable for an external device connected thereto.

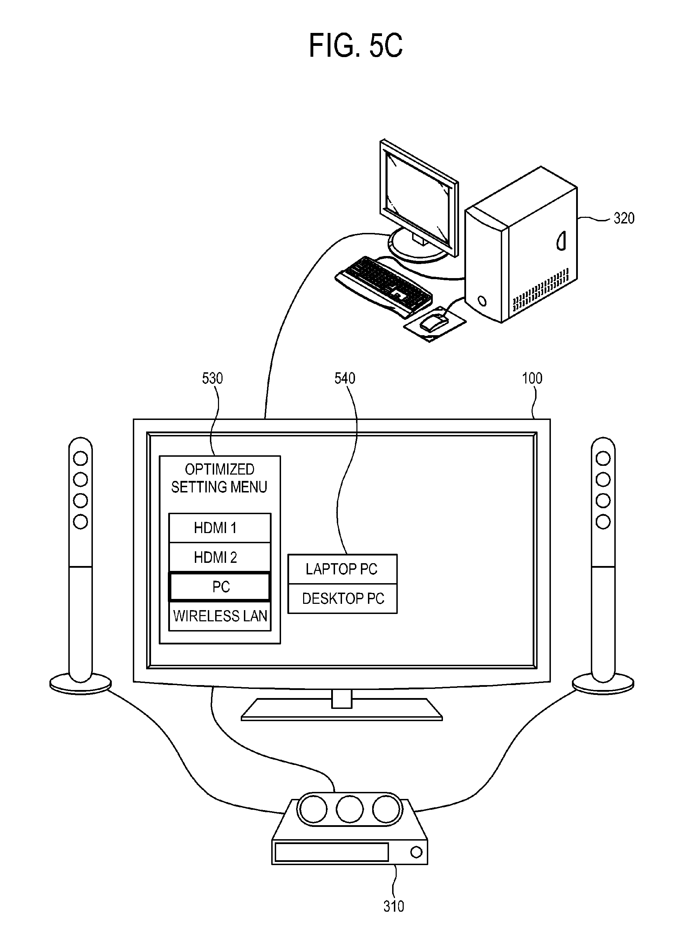

FIG. 5C illustrates a setting menu according to still another exemplary embodiment.

According to the exemplary embodiment of FIG. 5C, the setting menu may be set according to the type of an external device and a port to which the external device is connected. For example, an optimized setting menu 530 of a personal computer 310 may include a plurality of ports such as 'HDMI 1', 'HDMI 2', 'PC' and 'wireless LAN'. Here, an external device which can be connected to each of the ports may be displayed. For example, a sub menu 540 of the port 'PC' may include a laptop computer and a desktop computer. In this case, if each of the external devices is selected, functional combinations by which the display apparatus 100 can be optimized and used corresponding to the selected external device may be displayed.

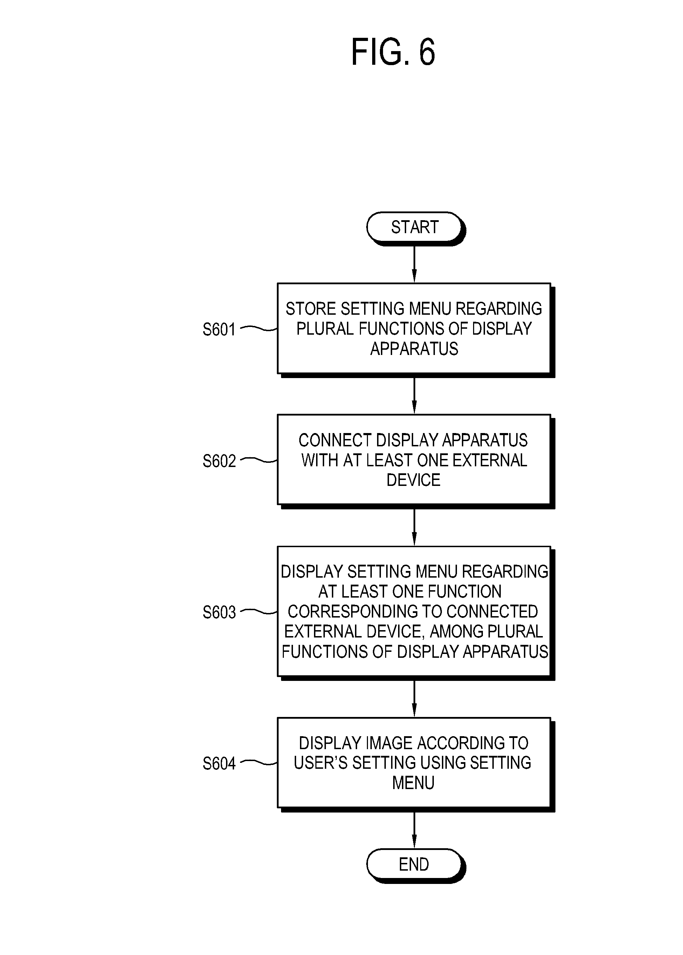

FIG. 6 is a flowchart for illustrating a control process of a display apparatus according to an exemplary embodiment.

Firstly, the display apparatus 100 stores a setting menu regarding a plurality of functions of the display apparatus 100 (S601).

Then, at least one external device is connected to the display apparatus 100 (S602).

Then, the display apparatus 100 displays the setting menu regarding at least one of the plurality of functions of the display apparatus 100, which corresponds to an external device connected thereto (S603).

According to an exemplary embodiment, the setting menu may be set according to the type of the external device. According to another exemplary embodiment, the setting menu may be set according to the type of the external device and a port to which the external device is connected. According to still another exemplary embodiment, the setting menu may be set according to a user's setting, in the case that the display apparatus 100 performs a plurality of functional combinations corresponding to an external device.

Then, the display apparatus 100 displays an image according to a function selected by a user using the setting menu (S604).

According to the exemplary embodiments, a user does not have to search for menus of the display apparatus optimization for an external device connected thereto. Thus, the user does not have to be accustomed to menu functions more than necessary and can change and set a desired menu promptly, to thereby enhance user convenience.

Although a few exemplary embodiments have been shown and described, it will be appreciated by those skilled in the art that changes may be made in these exemplary embodiments without departing from the principles of the invention, the scope of which is defined in the appended claims..

## Claims

1. A display apparatus comprising:
a connection unit which is connectable with at least one external device;
a signal processing unit which processes an image signal;
a display unit which displays an image based on the image signal processed by the signal processing unit;
a storage unit which stores therein a setting menu related to a plurality of functions of the display apparatus; and
a controller which controls the signal processing unit such that the setting menu related to at least one of the plurality of functions of the display apparatus corresponding to the at least one external device which is connected to the connection unit, is displayed via the display unit, wherein the image is displayed via the display unit according to a user's setting via the setting menu.

2. The display apparatus according to claim 1, wherein the setting menu is set according to a type of the at least one external device.

3. The display apparatus according to claim 1, wherein the connection unit comprises a plurality of ports to which the at least one external device is to be connected, and wherein the controller determines the setting menu according to a port to which the at least one external device is connected, among the plurality of ports.

4. The display apparatus according to claim 1, wherein when the display apparatus has a plurality of functional combinations with respect to the external device, the controller selects at least one of the plurality of functional combinations according to a user's setting.

5. The display apparatus according to claim 1, wherein the plurality of functions comprises functions which belong to different categories.

6. The display apparatus according to claim 1, wherein the controller controls the signal processing unit such that a list of a plurality of external devices is displayed by the display unit when the plurality of external devices are connected to the connection unit.

7. The display apparatus according to claim 1, wherein the plurality of functions are classified in a directory type, and wherein the controller controls the signal processing unit so that menus in a directory, which each include at least one function corresponding to the at least one external device, are sequentially displayed by the display apparatus.

8. The display apparatus according to claim 1, wherein the connection unit performs at least one of wireless and wired communication with the external device.

9. The display apparatus according to claim 1, wherein a plurality of functional combinations are provided for each of a plurality of external devices, and wherein the controller controls the signal processing unit so that the functional combinations corresponding to the at least one external device connected thereto are displayed by the display unit.

10. A control method of a display apparatus, comprising:
storing a setting menu regarding a plurality of functions of the display apparatus;
connecting the display apparatus with at least one external device;
displaying the setting menu regarding at least one of the plurality of functions of the display apparatus according to a connected external device; and
displaying an image according to a user's setting using the setting menu.

11. The method according to claim 10, wherein the setting menu is set according to a type of the external device.

12. The method according to claim 10, wherein the display apparatus comprises a plurality of ports to which the at least one external device is connectable, and wherein a function of the setting menu corresponding to a port to which the external device is connected, among the plurality of ports, is determined.

13. The method according to claim 10, wherein when the display apparatus has a plurality of functional combinations with respect to the connected external device, at least one of the plurality of functional combinations is selected according to the user's setting.

14. The method according to claim 10, wherein the plurality of functions comprises functions which belong to different categories.

15. The method according to claim 10, wherein a plurality of functional combinations are provided for each of a plurality of external devices, and wherein the plurality of functional combinations are displayed according to the connected external device.

## Amended claims

### Amended claims in accordance with Rule 137(2) EPC.

**1.** A display apparatus comprising:
a connection unit (110) which is connectable with at least one external device (210);
a signal processing unit (120) which processes an image signal;
a display unit (130) which displays an image based on the image signal processed by the signal processing unit;
a storage unit (140) which stores therein a setting menu related to a plurality of functions of the display apparatus for the external device(s) (210); and
a controller (150) which controls the signal processing unit such that the setting menu related to at least one of the plurality of functions of the display apparatus (100) corresponding to the at least one external device (210) which is connected to the connection unit (110), is displayed via the display unit, wherein the image is displayed via the display unit (130) according to a user's setting via the setting menu.

**2.** The display apparatus according to claim 1, wherein the setting menu is set according to a type of the at least one external device (210).

**3.** The display apparatus according to claim 1, wherein the connection unit (110) comprises a plurality of ports to which the at least one external device (210) is to be connected, and wherein the controller determines the setting menu according to a port to which the at least one external device is connected, among the plurality of ports.

**4.** The display apparatus according to claim 1, wherein when the display apparatus has a plurality of functional combinations with respect to the external device (210), the controller (150) selects at least one of the plurality of functional combinations according to a user's setting.

**5.** The display apparatus according to claim 1, wherein the plurality of functions comprises functions which belong to different categories.

**6.** The display apparatus according to claim 1, wherein the controller (150) controls the signal processing unit such that a list of a plurality of external devices is displayed by the display unit when the plurality of external devices are connected to the connection unit.

**7.** The display apparatus according to claim 1, wherein the plurality of functions are classified in a directory type, and wherein the controller (150) controls the signal processing unit (120) so that menus in a directory, which each include at least one function corresponding to the at least one external device, are sequentially displayed by the display apparatus.

**8.** The display apparatus according to claim 1, wherein the connection unit (110) performs at least one of wireless and wired communication with the external device.

**9.** The display apparatus according to claim 1, wherein a plurality of functional combinations are provided for each of a plurality of external devices (210), and wherein the controller controls the signal processing unit so that the functional combinations corresponding to the at least one external device connected thereto are displayed by the display unit.

**10.** A control method of a display apparatus, comprising:
storing a setting menu regarding a plurality of functions of the display apparatus for at least one external device (210);
connecting the display apparatus (100) with at least one external device (210);
displaying the setting menu regarding at least one of the plurality of functions of the display apparatus according to a connected external device; and
displaying an image according to a user's setting using the setting menu.

**11.** The method according to claim 10, wherein the setting menu is set according to a type of the external device.

**12.** The method according to claim 10, wherein the display apparatus (100) comprises a plurality of ports to which the at least one external device is connectable, and wherein a function of the setting menu corresponding to a port to which the external device is connected, among the plurality of ports, is determined.

**13.** The method according to claim 10, wherein when the display apparatus (100) has a plurality of functional combinations with respect to the connected external device, at least one of the plurality of functional combinations is selected according to the user's setting.

**14.** The method according to claim 10, wherein the plurality of functions comprises functions which belong to different categories.

**15.** The method according to claim 10, wherein a plurality of functional combinations are provided for each of a plurality of external devices (210), and wherein the plurality of functional combinations are displayed according to the connected external device.
